Europäisches Patentamt

European Patent Office

Office européen des brevets

(11) Veröffentlichungsnummer: **0 265 745**
**A2**

(12) **EUROPÄISCHE PATENTANMELDUNG**

(21) Anmeldenummer: 87114779.9

(51) Int. Cl.⁴ **A21D 13/00** , B65D 65/38

(22) Anmeldetag: 09.10.87

(30) Priorität: 15.11.86 DE 3639185
25.10.86 DE 3636382

(43) Veröffentlichungstag der Anmeldung:
**04.05.88 Patentblatt 88/18**

(84) Benannte Vertragsstaaten:
**AT BE CH DE ES FR GB GR IT LI LU NL SE**

(71) Anmelder: **Körner, Manfred**
**Nickelstrasse 17**
**D-6467 Hasselroth 1(DE)**

(72) Erfinder: **Körner, Manfred**
**Nickelstrasse 17**
**D-6467 Hasselroth 1(DE)**

(74) Vertreter: **Munderich, Paul, Dipl.-Ing.**
**Frankfurter Strasse 84**
**D-6466 Gründau-Rothenbergen(DE)**

(54) **Verfahren zur Herstellung einer Verpackung aus organischen Stoffen in beliebiger Formgebung für die Einbringung von Lebensmitteln.**

(57) Die Erfindung betrifft ein Verfahren zur Herstellung einer Verpackung aus organischen Stoffen in beliebiger Formgebung für die Einbringung von Lebensmitteln, die entweder leicht verrottbar, z.B. zu Komposterde, oder deren Wiederverwertung, insbesondere als Futtermittel und fallweise als Lebensmittel, vorgesehen ist. Die Verpackung besteht aus einer formstabilen Hülle 1, die seinerseits wieder aus mehreren Teilen 2/3 besteht. Die Teile werden aus einem dünnflüssigen Getreidemehlteig, in der Regel als Waffel 4, geformt und gebacken, wobei fallweise eine innenliegende Oblate 5 einen zusätzlichen Schutz für die einlagernden Lebensmittel bildet. Die Verbindung zwischen den Teilen wird durch einen Mehl-, Ei-, Zuckerkleber oder dergleichen gesundheitlich unschädliche Mittel hergestellt.

Fig.1

EP 0 265 745 A2

## "Verfahren zur Herstellung einer Verpackung aus organischen Stoffen in beliebiger Formgebung für die Einbringung von Lebensmitteln"

Die Erfindung betrifft ein Verfahren zur Herstellung einer Verpackung aus organischen Stoffen in beliebiger Formgebung für die Einbringung von Lebensmitteln, die entweder leicht verrottbar, z.B. Komposterde, oder deren Wiederverwertung, insbesondere als Futtermittel und fallweise als Lebensmittel, vorgesehen ist, wobei bei der Verwendung als Lebensmittel eine zusätzliche Umhüllung mit einer schmutundurchlässigen Folie in aller Regel obligatorisch ist.

Eine aus verfütterbaren oder eßbaren Substanzen hergestellte Verpackung gemäß dieser Begriffsbestimmung ist u.a. durch die sogenannte Eiswaffeltüte bekannt.

Das offene, kegelförmige Behältnis nimmt Speiseeis auf und dient insoweit als Verpackung. Diese Verpackung wird zwar nur kurzzeitig zur Portionierung und zur Manipulation bis zur Aufzehrung des Speiseeis verwendet, wobei die Waffel als solche immer mit verzehrt wird.

Selbstverständlich können in diesem Zusammenhang hygienische Bedenken geltend gemacht werden, da diese, zumindest während des Verzehrs, durch mehr oder weniger schmutzige Kinderhände gehalten wird.

Diese Situation gibt zu Fragen Anlaß.

Fest steht jedoch, daß aus dieser Sachlage bereits über Generationen hinweg keine ernsthaften Schädigungen oder sonstige Krankheiten entstanden.

Das Beispiel zeigt also, daß der Verzehr von Eistüten oder Eiswaffeln nicht unbedingt gesundheits-oder gar umweltgefährdend sein muß und weist darauf hin, daß die geltend gemachten Bedenken durchaus eine relative Betrachtungsweise rechtfertigen.

Die Immunität unserer Kinder, d.h. die Erzeugung der erforderlichen Abwehrstoffe, bedarf letzten Endes auch einer Anregung.

Trotzdem soll hier nicht der "Schmutz" als solcher propagiert, sondern lediglich die Tatsache nicht verschwiegen werden, daß die Lebensfähigkeit des Menschen keine übertriebene Sterilität, sondern letztlich dessen Bewährung in der gegebenen Umwelt voraussetzt.

Da umgekehrt ca. 330 Mill.m³ Abfälle, d.h. umgerechnet ca. 4,2 to je Einwohner pro Jahr anfallen, gewinnt der Gedanke an eine Wiederverwertung der gewählten Verpackung als Futtermittel und fallweise als Lebensmittel eine immense Bedeutung, da allein der Anteil an Papier, Feinpappen, Kleinverpackungen usw. zwischen 20 und 35 % - schwankt, und diese - zwar meist organischen - Abfälle in aufwendigen, über 10 bis 14 Tage in geeigneten Anlagen erstreckenden Verrottungsprozessen in einen Kompost überführt werden können. d.h., daß diese Art von Müll im Schnitt etwa 12 Tage zwischendeponiert werden muß, bis dessen sinnvolle Wiederverwertung möglich ist.

Der entstehende Gutstau und die damit erforderliche Stapelfläche sind nicht immer vertretbar, so daß auch der beschriebene direkte Verbrauch aktuell ist. Dies berücksichtigend ist es Aufgabe dieser Erfindung, ein Verfahren zur Herstellung einer Verpackung nach der eingangs beschriebenen Art zu nennen, deren Wiederverwertung als Verrottungsprodukt, als Futtermittel und fallweise auch als Lebensmittel verwendet werden kann.

Die erfindungsgemäße Lösung dieser Aufgabe sieht vor, daß die Grundsubstanz der die Verpackung bildenden Hülle aus Getreide, d.h. aus Früchten derjenigen Gräser, die wegen ihrer Eßbarkeit angepflanzt und durch Mahlung in ein pulverförmige bis körnige Granulometrie aufweisendes Mehl überführt wird, das fallweise mit Kartoffelmehl versetz-bzw. austauschbar ist, besteht, und daß aus der gesamten Mehlmenge ein flüssiger Teig, mit oder ohne Zusatz von Treibmitteln und mit oder ohne Zusatz von Eiklar, eine ein-oder auch mehrteilig verbindbare formstabile Hülle gebacken wird, deren Teigqualität als Waffel-, Eierkuchen-, Fladen-, Oblaten oder Vollkornteig anzusprechen ist.

Die Einlagerung des Verpackungsgutes in eine formstabile Hülle erlaubt nicht nur die raumfüllende Einlagerung plastischen oder schüttfähigen Gutes, sondern sie ermöglicht auch eine sichere Einlagerung vorgeformter Gutstücke bei optimaler Packungsdichte, wobei selbstverständlich die Formgebung der Hülle der der zu verpackenden Teile weitgehend angepaßt werden kann.

Die formstabile Hülle wird aus einem flüssigen Getreidemehlteig in einer der genannten Teigqualitäten geformt und gebacken.

Durch diese Stoffwahl wird die Möglichkeit der Verrottung und der Genießbarkeit der Hülle für Tier und Mensch bestätigt, wobei bei der Verwendung als Nahrungsmittel auf die eingangs gegebene Empfehlung verwiesen wird.

Als Getreide werden die Früchte von Weizen, Roggen, Gerste, Hafer, Mais, Reis, Sorghum oder dergleichen zur Mahlung verwendet, wobei evtl. Neuzüchtungen, die unter den klassifizierenden Begriff, d.h. "Früchte aus denjenigen Gräsern, die wegen ihrer Eßbarkeit angepflanzt werden", mit unter die erweiterbare Einzeldefinition der heute üblichen Sorten fallen.

Es kann zweckmäßig sein, daß die Innenflächen der Hülle durch ein mit oder ohne Stärkemehlzusatz gefertigtes Oblatenteil beschichtet werden, wobei es selbstverständlich möglich ist, eine bereits vorgeformte Oblate mit in die Backform einzubringen.
Ein zusätzlicher Porenverschluß kann durch die Zugabe von Gelatine eingestellt werden.

Eine weitere Verbesserung der Dichtigkeit ist durch die Aufbringung einer Hartfettglasur einstellbar, wobei diese entweder selbständig oder in Verbindung mit einer Oblatenbeschichtung aufgebracht wird.

Um den möglichen Geschmacksrichtungen Rechnung zu tragen, kann vorgesehen werden, daß insbesondere die Hartfettglasur als Träger von Geschmacksstoffen aller Art, wahlweise auch Kakao, versetzbar ist.

Die Verbindung der Einzelteile einer mehrteiligen Hille wird durch einen Mehl-, Ei-, Zuckerkleber oder dergleichen gesundheitlich unschädlichen Mitteln hergestellt, wobei in der Regel vorgesehen ist, daß die Hülle aus einem Unter-und Oberteil mit gestuft ineinandergreifenden Falzen ausgebildet wird, und hierbei die in ihren Ebenen einander zugerichteten Flächen als Träger der Kleber verwendet werden.

Zur Erhöhung der Stabilität ist vorgesehen, daß in dem Unterteil und/oder dem Unter-und Oberteil der Hülle versteifende, aus dem Getreidemehlteig bestehende Rippen ausgeformt werden.

Im Interesse der Stapelbarkeit wird vorgeschlagen, daß der Boden des Unterteils und der Deckel des Oberteils planparallel zueinander verlaufend ausgebildet werden.

Nicht mehr benötigte bzw. gebrauchte Verpackungen können zerdrückt und der entstandene Waffelbruch zu Komposterde aufbereitet oder als Futtermittel für Tiere verwendet werden, sofern man, z.B. gesüßte Waffeln, nicht als Leckerei für Kinder verwenden will.

Der Teig kann darüberhinaus Träger für eine Vielzahl von Lebensmittel-Farbstoffen sein, so daß eine einfache Markierung bzw. Klassierung verschieden gefüllter Verpackungen möglich ist.

Um die Nutzungsmöglichkeit der Hülle zu erweitern, ist vorgesehen, daß zum Öffnen des Deckels dieser um eine mit dem Unterteil im Stoßbereich der beiden Hauptteile im Abstand vor der Seitenwand angeordnete Scharnierwelle geöffnet und in der entgegengesetzten Schwenkrichtung der Scharnierhülse um die Scharnierwelle der Deckel wieder geschlossen wird.

Die nach diesem Verfahren hergestellte Verpackung erfüllt damit in vollem Umfang die Forderungen der Aufgabenstellung.

Die Erfindung wird durch die beigefügte zeichnerische Darstellung einer beispielsweisen Ausbildung der Verpackung näher erläutert.

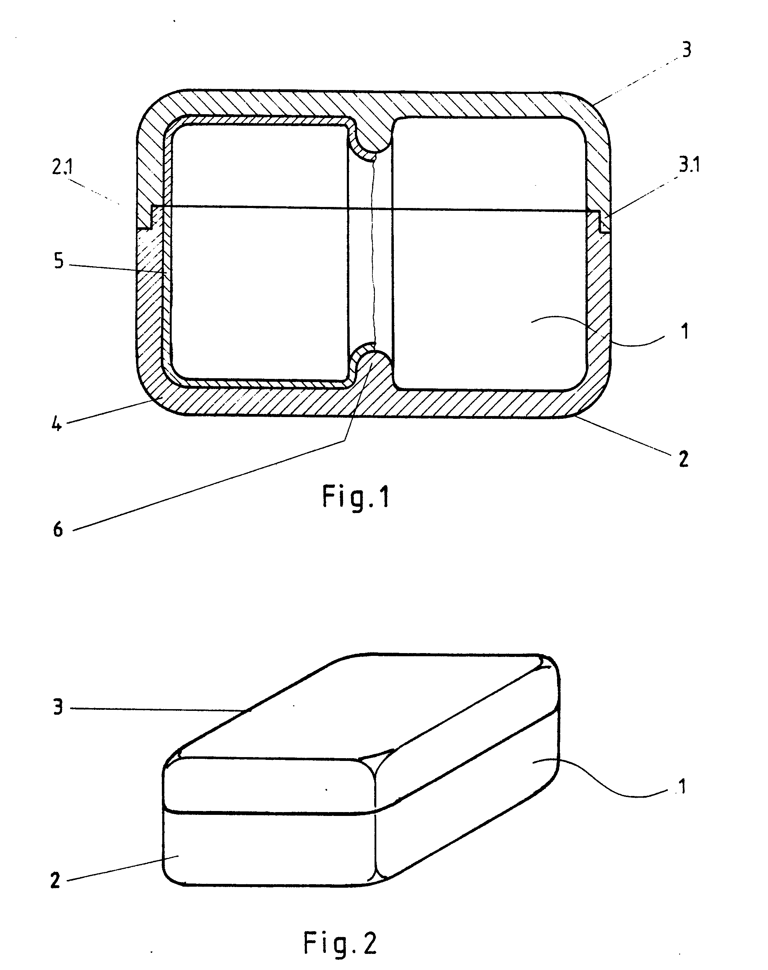

Figur 1 zeigt einen Querschnitt durch eine Verpackung, wobei die linke Hälfte dieser Figur eine Ausführung mit einer Oblatenabdeckung der Innenwandungen ausweist.

Figur 2 zeigt in perspektivischer Darstellung die Außenform der Hülle.

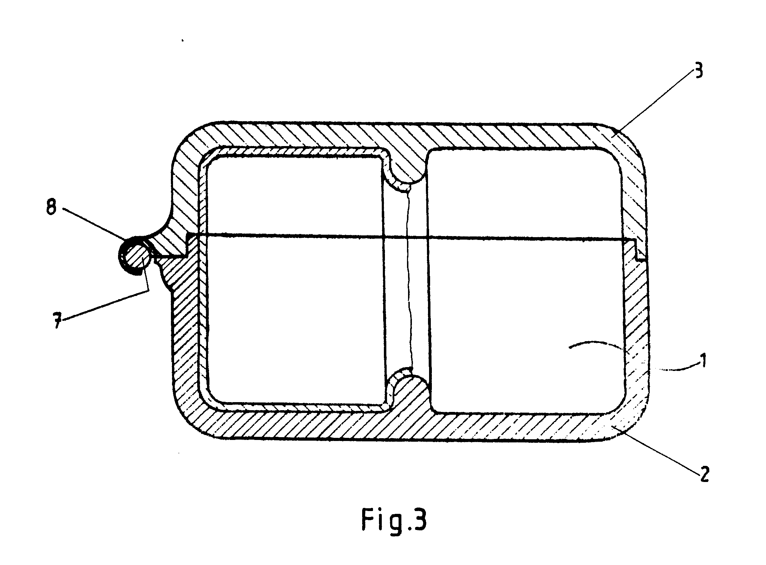

Figur 3 zeigt eine mit Scharnier ausgerüstete Hülle.

Die Verpackungshülle 1 ist aus einem Unterteil 2 und einem Oberteil 3 gebildet, wobei diese durch gestufte, ineinandergreifende Falze 2.1 und 3.1 miteinander verbindbar sind.
Die einander zugerichteten Ebenen der Falze sind dabei Träger der Kleberschicht.
Die Teile 2 und 3 sind aus einem Waffelteig geformt und gebacken, wobei es bei statisch beanspruchten Hüllen zweckmäßig erscheint, in die Negativteile der Backform rillenförmige Ausformungen zur Bildung einer versteifenden Verrippung 6 in den Waffelteig vorzusehen.

Bei Gefahr von Durchfeuchtungen ist es zweckmäßig, die inneren Oberflächen des Unter- und Oberteils 2/3 mit einer entsprechend geformten Oblate 5 auszukleiden.

Es ist daran gedacht, die innere Waffelform mit der noch weichen Oblate zu belegen und beide Schichten zusammenzubacken.

Des weiteren kann vorgesehen werden, daß dem Unterteil 2 das Deckelteil 3 gelenkig verbunden ist, wobei beispielsweise dem Unterteil 2 mit Abstand vor der Seitenwand eine Welle 7 im Stoßbereich der beiden Hauptteile 2/3 fest angeordnet ist, über die korrespondierend um die partiell geöffnete Hülse 8 der Deckel 3 schwenkbar ist.

Selbstverständlich können auch andere Ausbildungsformen vorgesehen werden.

**Ansprüche**

1. Verfahren zur Herstellung einer Verpackung aus organischen Stoffen in beliebiger Formgebung für die Einbringung von Lebensmitteln, die entweder leicht verrottbar, z.B. zu Komposterde, oder deren Wiederverwertung, insbesondere als Futtermittel und fallweise als Lebensmittel, vorgesehen ist, wobei bei der Verwendung als Lebensmittel eine zusätzliche Umhüllung mit einer schmutzundurchlässigen Folie in aller Regel obligatorisch ist, dadurch gekennzeichnet,

daß die Grundsubstanz der die Verpackung bildenden Hülle (1) aus Getreide, d.h. aus Früchten derjenigen Gräser, die wegen ihrer Eßbarkeit angepflanzt und durch Mahlung in ein pulverförmige bis körnige Granulometrie aufweisendes Mehl überführt wird, das fallweise mit Kartoffelmehl versetz-bzw. austauschbar ist, besteht,

daß aus der gesamten Mehlmenge ein flüssiger Teig, mit oder ohne Zusatz von Treibmitteln und mit oder ohne Zusatz von Eiklar, eine ein-oder auch mehrteilig verbindbare formstabile Hülle gebacken wird,
deren Teigqualität als Waffel-, Eierkuchen-, Fladen-, Oblaten-oder Vollkornteig anzusprechen ist.

2. Verfahren zur Herstellung einer Verpackung nach Anspruch 1, dadurch gekennzeichnet,

daß als Getreide Weizen, Roggen, Gerste, Hafer, Mais, Reis, Sorghum oder dergleichen zur Mahlung verwendet wird.

3. Verfahren zur Herstellung einer Verpackung nach Anspruch 1 und 2, dadurch gekennzeichnet,

daß die Innenflächen der Hülle (1) durch ein mit oder ohne Stärkemehlzusatz gefertigtes Oblatenteil(5) beschichtet werden.

4. Verfahren zur Herstellung einer Verpackung nach Anspruch 3, dadurch gekennzeichnet,

daß ergänzend zu der Oblatenbeschichtung (5) ein zusätzlicher Porenverschluß durch die Zugabe von Gelatine eingestellt wird.

5. Verfahren zur Herstellung einer Verpackung nach Anspruch 1 bis 4, dadurch gekennzeichnet,

daß die Innenbeschichtung durch die Aufbringung einer Hartfettglasur hergestellt ist, wobei diese entweder selbständig oder in Verbindung mit der Oblatenbeschichtung aufgebracht wird.

6. Verfahren zur Herstellung einer Verpackung nach Anspruch 5, dadurch gekennzeichnet,

daß insbesondere die Hartfettglasur als Träger von Geschmacksstoffen aller Art, wahlweise auch Kakao, versetzbar ist.

7. Verfahren zur Herstellung einer Verpackung nach Anspruch 1, dadurch gekennzeichnet,

daß die Verbindung der Einzelteile (2/3) einer mehrteiligen Hülle (1) durch einen Mehl-, Ei-, Zuckerkleber oder dergleichen gesundheitlich unschädlichen Mitteln hergestellt wird.

8. Verfahren zur Herstellung einer Verpackung nach Anspruch 1, dadurch gekennzeichnet,

daß die Hülle (1) aus einem Unter-und Oberteil (2/3) mit gestuft ineinandergreifenden Falzen (2.1 und 3.1) ausgebildet wird, wobei die in ihren Ebenen zueinander gerichteten Flächen als Träger für den Kleber verwendet werden.

9. Verfahren zur Herstellung einer Verpackung nach Anspruch 1, dadurch gekennzeichnet,

daß in dem Unterteil (2) und/oder dem Unterund Oberteil (2/3) der Hülle (1) versteifende, aus dem Getreidemehlteig bestehende Rippen (6) ausgeformt werden.

10. Verfahren zur Herstellung einer Verpackung nach Anspruch 1, dadurch gekennzeichnet,

daß der Boden des Unterteils (2) und der Deckel des Oberteils (3) planparallel zueinander verlaufend ausgebildet werden.

11. Verfahren zur Herstellung einer Verpackung nach Anspruch 1, dadurch gekennzeichnet,

daß zum Öffnen des Deckels (3) dieser um eine mit dem Unterteil (2) im Stoßbereich der beiden Hauptteile (2/3) im Abstand vor der Seitenwand angeordnete Scharnierwelle (7) geöffnet und in der entgegengesetzten Schwenkrichtung der Scharnierhülse (8) um die Scharnierwelle (7) der Deckel (2) wieder geschlossen wird.

Fig.1

Fig.2

Fig.3